# EUROPÄISCHE PATENTSCHRIFT

(11) **EP 1 663 625 B1**
(45) Veröffentlichungstag und Bekanntmachung des Hinweises auf die Patenterteilung: **26.08.2009**
(21) Anmeldenummer: 04786921.9
(22) Anmeldetag: 08.09.2004
(51) Int. Cl.: B29C 70/86, B29C 70/24, B29C 70/08

(54) **KRAFTEINLEITUNGSSTELLE IN KERNVERBUNDEN UND VERFAHREN ZU IHRER HERSTELLUNG MIT IN DICKENRICHTUNG DES KERNVERBUNDES DURCHSETZENDEN ARMIERUNGSELEMENTEN**
FORCE-INTRODUCTION POINT IN CORE COMPOSITES AND METHOD FOR PRODUCING SAID POINT USING REINFORCEMENT ELEMENTS THAT TRAVERSE THE THICKNESS OF THE CORE COMPOSITE
ZONE D'INDUCTION DE FORCES DANS DES PANNEAUX SANDWICH ET PROCEDE DE REALISATION D'UNE TELLE ZONE A L'AIDE D'ELEMENTS D'ARMATURE TRAVERSANT UN TEL PANNEAU SANDWICH DANS LE SENS DE L'EPAISSEUR

(30) Priorität: 08.09.2003 DE 20314187 U; 08.09.2003 DE 10342183
(43) Veröffentlichungstag der Anmeldung: 07.06.2006
(73) Patentinhaber: Evonik Röhm GmbH, 64293 Darmstadt (DE)
(72) Erfinder: ROTH, Matthias, Alexander, 64347 Griesheim (DE)
(86) Internationale Anmeldenummer: PCT/EP2004/010033
(87) Internationale Veröffentlichungsnummer: WO 2005/023526

(56) Entgegenhaltungen:
- EP-A- 0 903 216

## Beschreibung

Krafteinleitungsstelle in Kernverbunden und Verfahren zu ihrer Herstellung mit in Dickenrichtung des Kernverbundes durchsetzenden Armierungselementen.

Die Erfindung betrifft die Gestaltung sowie die Herstellung von Krafteinleitungsstellen in Kernverbunden mit im Bereich der Einleitungsstelle in Dickenrichtung des Kernverbundes durchsetzenden Armierungselementen nach dem Oberbegriff des Anspruchs 1.

Die Erfindung eignet sich zur Einleitung von Kräften und Momenten in Kernverbund-Strukturen. Die Kernverbund-Struktur kann vorzugsweise aus Faser-Kunststoff-Verbund mit Deckschichten aus textilen Halbzeugen (1 und 3, z.B. Gewebe, Gelege, Matten, etc.), einem Kernmaterial (2, z.B. polymerer Schaumstoff) und einem polymeren Matrixwerkstoff (Thermo- oder Duroplast) bestehen. Kernverbunde sind schichtweise aufgebaute Strukturen, die aus relativ dünnen oberen (1) und unteren Deckschichten (3) sowie aus einer relativ dicken Kernschicht (2) niedriger Rohdichte bestehen. Aufgrund der vergleichsweise dünnen Deckschichten und des zug- und druckweichen Kernwerkstoffes reagieren Kernverbund-Strukturen grundsätzlich empfindlich auf örtlich eingeleitete Kräfte bzw. Momentbelastungen. Daher muss die Krafteinleitung in Kernverbund-Strukturen beanspruchungs-, werkstoff und fertigungsgerecht ausgeführt werden. Der an der Krafteinleitungsstelle herrschende, mehraxiale Beanspruchungszustand kann nicht mehr von den ausschließlich auf Membranbelastungen (Zug, Druck, Schub) ausgelegten Deckschichten ertragen werden. Die hierdurch erforderlichen konstruktiven Maßnahmen an der Krafteinleitungsstelle hängen von Ort und Richtung der Kräfte und von der Zusammensetzung der einwirkenden Kräfte ab. Die Krafteinleitung hat in der Regel so zu erfolgen, dass keine örtlichen Instabilitäten (z.B. Beulen oder Knittern der Deckschichten) auftreten, die Kernschicht und die Deckschichten nicht beschädigt werden und sich das Krafteinleitungselement von der Kernverbund-Struktur nicht löst. Dies setzt eine möglichst großflächige und gleichmäßige Verteilung der eingeleiteten Kräfte und Momente in die Kernverbund-Struktur voraus. Somit ist allen konstruktiven Maßnahmen zur Einleitung von Kräften in Sandwich-Strukturen gemein, dass sie eine Herabsetzung des örtlichen Spannungsniveaus durch die Vergrößerung von Krafteinleitungs- und Querschnittsflächen bewirken. Außerdem muss in einigen Anwendungsfällen der druckweiche Kernwerkstoff im Bereich der Krafteinleitungsstelle durch ein druckfestes Material ersetzt werden, so dass z. B. die Vorspannkräfte von Schraubverbindungen ertragen werden können.

Zur Einleitung von Kräften und Momenten in Kernverbunden können zusätzliche aufgebrachte (sogenannte Onserts) oder eingebrachte Krafteinleitungselemente (sogenannte Inserts) eingesetzt werden. Außerdem besteht die Möglichkeit, den Kernwerkstoff im Bereich der Krafteinleitungsstelle zu entfernen und beide Deckschichten zusammenzuführen, so dass ein monolithischer Bereich aus Faser-Kunststoff-Verbund vorliegt und keine zusätzlichen Krafteinleitungselemente benötigt werden. Als weitere Krafteinleitungskonzepte für Kernverbund-Strukturen können selbstschneidende Schrauben oder Schraubeinsätze sowie Nietverbindungen Anwendung finden, die allerdings nur geringe Kräfte oder Momente übertragen können. Krafteinleitungsstellen sind immer dann notwendig, wenn Kräfte und Momente in eine Struktur eingeleitet bzw. aus einer Struktur ausgeleitet werden sollen und Bauteile miteinander verbunden werden sollen. Kernverbund-Strukturen aus Faser-Kunststoff-Verbund finden z.B. in der Luft- und Raumfahrt, im Schienen- und Kraftfahrzeugbau sowie im Schiffsbau häufig Anwendung.

Alle bekannten aufgebrachten Krafteinleitungselemente (Onserts) für

Kernverbund-Strukturen aus Faser-Kunststoff-Verbund werden auf eine der beiden Deckschichten stoffschlüssig verbunden. Alle Lösungen dieses Krafteinleitungskonzepts haben folgende Nachteile gemein. Beide Deckschichten werden stark unterschiedlich belastet, d.h. die Deckschicht mit dem aufgebrachten Onsert wird im Vergleich zur gegenüberliegenden Deckschicht deutlich höher beansprucht. Dadurch kann es zur Delamination zwischen dem Onsert und der Deckschicht bzw. zwischen den Deckschichten und der Kernschicht kommen. Weiterhin wird der zug- und druckweiche Kernwerkstoff unterhalb des Onserts nicht ausreichend verstärkt, so dass der Kernwerkstoff hohen Belastungen ausgesetzt ist und der Kernwerkstoff versagen kann. Um ein Versagen der Kernschicht unterhalb des Onserts zu vermeiden, wird bei einigen Lösungen der Kernwerkstoff vollständig im Bereich der Krafteinleitungsstelle durch ein anderes Material mit höheren mechanischen Eigenschaften substituiert.

Alle bekannten zusätzlich eingebrachten Krafteinleitungselemente (Inserts) werden mit der Kernverbund-Struktur stoffschlüssig verbunden. Hierbei können die Inserts innerhalb der Deckschichten, zwischen Deck- und Kernschicht oder im Kernwerkstoff platziert werden. Aufgrund der rein stoffschlüssigen Verbindung können sich die Inserts infolge von örtlich angreifenden Kräften oder einer Momentbelastung von der gesamten Kernverbund-Struktur durch Versagen der Klebeverbindung lösen, wodurch ein Totalversagen der Krafteinleitung bzw. eine Delamination zwischen den Deckschichten und der Kernschicht auftreten kann.

Alle bekannten Krafteinleitungskonzepte für Kernverbund-Strukturen ohne zusätzliche Krafteinleitungselemente haben gemein, dass im Bereich der Krafteinleitungsstelle der Kernwerkstoff zunächst entfernt oder gestaucht wird und die beiden Deckschichten zusammengeführt werden, so dass ein monolithischer Bereich aus Einzelverstärkungslagen aus Faser-Kunststoff-Verbund vorliegt. Anschließend kann eine Bolzenverbindung in den monolithischen Bereich angebracht werden. Hierbei kommt es bei allen bekannten Lösungen im Bereich der Zusammenführung zum Versagen der Deckschichten oder außerhalb des Bereichs der Zusammenführung zum Kernversagen oder zur Delamination zwischen den Deckschichten und der Kernschicht, da diese Bereiche keine zusätzliche kraft- und formschlüssige Verstärkung der Kernverbund-Struktur in Dickenrichtung der Kernverbund-Struktur aufweisen.

In den Schriften DE 100 02 281 A1 und EP 1 106 341 A2 werden Möglichkeiten eines Krafteinleitungskonzeptes für Kernverbund-Strukturen ohne zusätzliches Krafteinleitungselement durch Zusammenführen der Deckschichten offenbart. Bei diesen Erfindungen erfolgt jedoch keine kraft- und formschlüssige Verstärkung der Kernverbund-Struktur inner- oder außerhalb des Bereichs der Deckschichtzusammenführung, so dass weder der Widerstand gegen Delamination (Schälfestigkeit) zwischen den Deckschichten und der Kernschicht verbessert werden kann noch die Kernschicht eine Armierung aufweist. Somit kann mit diesen beiden offenbarten Möglichkeiten das typische Versagensverhalten, Delamination zwischen den Deckschichten und der Kernschicht und Kernversagen im Bereich der Krafteinleitungsstelle, nicht verbessert werden.

In der Schrift US 005741574A wird eine Möglichkeit offenbart, wie eine Bolzenverbindung mit Hilfe einer in den Kern eingebrachten Faserverstärkungsstruktur verstärkt werden kann. Diese Erfindung beruht darauf, dass zunächst Faserfäden in den kompletten Kernwerkstoff eingebracht werden. Anschließend werden die textilen Deckschichten auf den Kernwerkstoff aufgebracht und mit Druck beaufschlagt, so dass der Kernwerkstoff gestaucht wird und die Fäden in die Deckschichten eindringen können. Danach erfolgt die Imprägnierung der Kernverbund-Struktur mit einem flüssigen duromeren Harzsystem. Daran schließt sich der Aushärteprozess des Harzsystems an. In die ausgehärtete Kernverbund-Struktur wird ein Durchgangsloch für die Bolzenverbindung eingebracht. Die Faserfäden im Kernwerkstoff sollen hierbei die Vorspannkräfte der Schraubverbindung aufnehmen und die Neigung zur Delamination zwischen den Deckschichten und der Kernschicht im Bereich der Krafteinleitungsstelle verhindern. Bei dieser Erfindung kommt es im Krafteinleitungsbereich nur zu einer stoffschlüssigen und nicht zu einer kraft- und formschlüssigen Verbindung zwischen den Faserfäden und der gesamten Kernverbund-Struktur, wodurch der Widerstand gegen Delamination zwischen den Deckschichten und der Kernschicht im Vergleich zu einer kraft- und formschlüssigen Verbindung nur geringfügig gesteigert wird. Weiterer Nachteil dieser Erfindung ist, dass der komplette Kernwerkstoff der Kernverbund-Struktur Nähfäden aufweist. Dadurch erfährt die Krafteinleitungsstelle im Vergleich zur restlichen Kernverbund-Struktur keine notwendige und zusätzliche Armierung, so dass die ungestörte Kernverbund-Struktur und die Krafteinleitungsstelle stark unterschiedlich belastet sind und das Leichtbaupotential von Kernverbund-Strukturen nicht vollständig ausgeschöpft wird. Des Weiteren liegt der Kernwerkstoff im Bereich der Durchgangsbohrung offen vor, wodurch flüssige oder gasförmige Medien in den Kernwerkstoff eindringen können. Diese eingedrungenen Medien können die Eigenschaften des Kernwerkstoffs negativ verändern und sogar ein Versagen auslösen.

In der Schrift DE 198 34 772 C2 wird eine Möglichkeit der Anbindung von zusätzlich eingesetzten Krafteinleitungselementen (Inserts) mit einer aus Einzelverstärkungslagen bestehenden Faserverstärkungsstruktur offenbart. Hierbei wird das Insert zwischen die Einzelverstärkungslagen platziert und mit Hilfe von Nähfäden in Dickenrichtung der Faserverstärkungsstruktur vernäht. Die offenbarte Lösung zur Anbindung von Inserts in monolithische Faserverstärkungsstrukturen bestehend aus Einzelverstärkungslagen könnte auch bei Kernverbund-Strukturen Anwendung finden. Hierbei würde das Insert zwischen die Einzelverstärkungslagen einer der beiden Deckschichten eingebracht und mit Hilfe von Nähfäden vernäht werden. Anschließend würde sowohl die Deckschicht einschließlich dem vernähten Insert als auch die andere Deckschicht auf die Kernschicht aufgebracht werden. Mit Hilfe eines Flüssigimprägnierverfahrens könnten die Deckschichten mit einem polymeren Matrixwerkstoff getränkt und die Klebeverbindung zwischen den Deckschichten und der Kernschicht erzeugt werden, so dass eine Kernverbund-Struktur aus Faser-Kunststoff-Verbund vorliegt. Die Anwendung der offenbarte Erfindung auf Kernverbund-Strukturen würde nur eine mit Hilfe von Nähfäden erzeugte kraft- und formschlüssige Verbindung zwischen Insert und einer Deckschicht bewirken. Dadurch kann im Bereich der Krafteinleitungsstelle weder der Widerstand gegen Delamination zwischen den Deckschichten und der Kernschicht erhöht werden noch der zug- und druckweiche Kernwerkstoff verstärkt werden, wodurch beide typische Versagensformen von Kernverbund-Strukturen nicht verbessert werden können. Weitere Nachteil dieser Erfindung ist, dass bei Einleitung von Kräften und Momenten in das Insert die Deckschicht, in der sich das Insert befindet, deutlich höher beansprucht wird als die andere Deckschicht, wodurch das Leichtbaupotential von Kernverbunden nicht vollständig ausgeschöpft werden kann. Außerdem muss der Kraftfluss von einer Deckschicht zu anderen über den Kernwerkstoff, der im Vergleich zum Werkstoff der Deckschichten geringe mechanische Eigenschaften aufweist und die Schwachstelle in der Kernverbund-Struktur darstellt, erfolgen. Dadurch kann der Kernwerkstoff sehr hoch beansprucht und Kernversagen ausgelöst werden. Somit werden die Festigkeit und Steifigkeit dieser Krafteinleitung bzw. der gesamten Kernverbund-Struktur hauptsächlich durch die geringen mechanischen Eigenschaften des Kernwerkstoffs beeinflusst.

Dokument WO-A-03 011 577 offenbart die Merkmale des Oberbegiffs des Anpruchs 1.

Alle bisher bekannten Krafteinleitungskonzepte für Kernverbund-Strukturen haben gemeinsam, dass die Kernverbund-Struktur im Bereich der Krafteinleitungsstelle unzureichend verstärkt wird, wodurch Kernversagen infolge zu hoher Zug-, Druck- oder Schubspannungen sowie Delamination zwischen den Deckschichten und der Kernschicht auftreten können. Des Weiteren erfolgt bei allen bekannten Lösungen von zusätzlich aufgebrachten bzw. eingebrachten Krafteinleitungselementen keine kraft- und formschlüssige Anbindung der Elemente mit der gesamten Kernverbund-Struktur. Dadurch kann weder ein Ablösen des Krafteinleitungselementes von der Kernverbund-Struktur noch die Delamination zwischen den Deckschichten und der Kernschicht bzw. zwischen dem Krafteinleitungselement und der Deckschicht nicht verhindert werden.

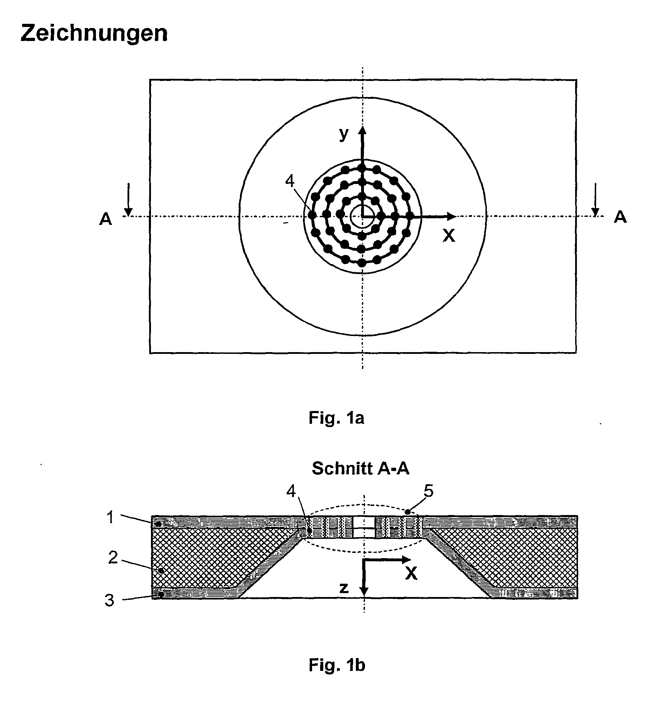

Der Erfindung liegt die Aufgabe zu Grunde, die mechanischen Eigenschaften der Krafteinleitungsstelle in Kernverbunden durch Einbringen von Armierungselementen in Dickenrichtung der Kernverbund-Struktur (z-Richtung) zu verbessern (Fig. 1a und 1b).

Diese Aufgabe wird gemäß den Merkmalen des Anspruchs 1 gelöst. Durch die Armierungselemente sind im Bereich der Krafteinleitungsstelle die obere Deckschicht, die Kernschicht und die untere Deckschicht kraft- und formschlüssig verbunden. Des Weiteren kann das Krafteinleitungselement mit Hilfe der Armierungselemente mit dem Kernverbund befestigt werden. Als Armierungslemente können vorzugsweise textile Armierungsstrukturen (4, z.B.

Nähfäden, Faserbündel, Rovings, etc.) verwendet werden. Diese Erfindung betrifft Kernverbunde mit Deckschichten (1 und 3), vorzugsweise aus textilen Halbzeugen (z.B. Gewebe, Gelege, Gestricke, Matten, etc.), und mit einer Kernschicht (2), vorzugsweise aus polymerem Hartschaumstoff, und ggf. mit einem Matrixwerkstoff, vorzugsweise aus polymerem Material (Thermoplast, Duroplast). Die Kernverbund-Struktur kann in einem der zahlreichen Liquid Composite Moulding (LCM) Verfahren (z.B. Harzinjektions- bzw. Harzinfiltrationsverfahren) hergestellt werden. Diese Art von Kernverbund-Strukturen werden vor der Imprägnierung durch den polymeren Matrixwerkstoff im Krafteinleitungsbereich mit Hilfe einer textilen Armierungsstruktur in Dickenrichtung verstärkt. Die Herstellung dieser armierten Krafteinleitungsstellen kann z.B. mit der industriellen Nähtechnik erfolgen. Das Einbringen der Armierungsstruktur, vorzugsweise Nähfäden, in Dickenrichtung des Kernverbundes kann z.B. mit einer Nähnadel geschehen. Die Nähnadel sticht hierbei in die gesamte Kernverbund-Struktur und hinterlässt bei einem Kernwerkstoff aus polymerem Hartschaumstoff ein Durchgangsloch einschließlich der Armierungsstruktur. Hierbei muss die Querschnittsfläche des Durchgangslochs im Vergleich zur Querschnittsfläche der Armierungsstruktur ausreichend groß sein, damit die Armierungsstruktur mit dem polymeren Matrixwerkstoff getränkt und an die Kernschicht stoffschlüssig verbunden werden kann. Die Armierungselemente können einen von 0° zur z-Achse abweichenden Winkel innerhalb einer xz- oder yz-Ebene in Dickenrichtung der Kernverbund-Struktur aufweisen (Fig. 1a und 1b), z.B. empfiehlt sich bei schubdominierender Belastung ein Winkel von +/- 45° zwischen der x- und z- Achse und/ oder zwischen der y- und z-Achse. Nach dem die Krafteinleitungsstelle und die gesamte Kernverbund-Struktur vollständig mit der Armierungsstruktur verstärkt ist, werden die textilen Deckschichten und das Durchgangsloch einschließlich der Armierungsstruktur in einem LCM-Verfahren mit dem polymeren Matrixwerkstoff imprägniert, wobei gleichzeitig die stoffschlüssige Anbindung des Kernwerkstoffes mit den Deckschichten erfolgt. Nach abgeschlossener Aushärtung der Kernverbund-Struktur stellt die mit dem polymeren Matrixwerkstoff getränkte textile Armierungsstruktur unidirektionale, faserverstärkte Zug/Druck-Stäbe innerhalb des Kernwerkstoffes dar, die eine Verstärkung der Krafteinleitungsstelle, des Kernwerkstoffs und des gesamten Kernverbundes bewirken. Die Armierungsstruktur hat hierbei die Aufgabe die Schälfestigkeit zwischen dem Krafteinleitungselement und der Kernverbund-Struktur bzw. zwischen den Deckschichten und der Kernschicht zu erhöhen, ein Ablösen des Krafteinleitungselementes von der Kernverbund-Struktur zu verhindern und die mechanischen Eigenschaften des Kernmaterials (Festigkeits- und Steifigkeitskennwerte in Dickenrichtung) zu verbessern. Durch die textile Armierungsstruktur kann ein vorhandener Riss im Grenzbereich von Deck- und Kernschicht gestoppt bzw. umgelenkt werden. Dadurch kann das Fail-Safe-Verhalten von Krafteinleitungen für Kernverbunde verbessert werden. Durch das Einbringen einer textilen Armierungsstruktur in Dickenrichtung der Kernverbund-Struktur im Bereich der Krafteinleitungsstelle können im Vergleich zu den bekannten konventionellen Krafteinleitungskonzepten die Druck- und

Zugfestigkeit senkrecht zur Kernverbund-Ebene, die Druck- und Zugsteifigkeit senkrecht zur Kernverbund-Ebene, die Druckfestigkeit in Kernverbund-Ebene, die Schubfestigkeit und -steifigkeit sowie die Schälfestigkeit zwischen den Deckschichten und der Kernschicht bzw. zwischen dem Krafteinleitungselement und den Deckschichten erhöht werden. Weiterhin kann das Versagensverhalten durch die erhöhte Schälfestigkeit und durch die "Rissstopp-Funktion" der einzelnen Armierungselemente verbessert werden, so dass eine schlagartige Zerstörung der Krafteinleitung verhindert werden kann und somit sogenanntes Fail-Safe-Verhalten vorliegt. Mit Hilfe der industriellen Nähtechnologie können die Krafteinleitungselemente positionstreu mit der Kernverbund-Struktur verbunden werden. Über das Einbringen und Vorhandensein einer gewissen Anzahl von Armierungselementen kann die Qualitätssicherung von Krafteinleitungsstellen in Kernverbunden gewährleistet werden.

Ein weiterer Vorteil dieser Erfindung besteht darin, dass die Armierungselemente über die Krafteinleitungsstelle hinaus in die Krafteinleitungsstelle umgebende Kernverbund-Struktur hineinreichen können, wodurch höhere Kräfte und Momente in die Kernverbund-Struktur eingeleiten werden können.

Um keine zusätzlichen Krafteinleitungselemente, die das Gewicht der Kernverbund-Struktur nachteilig beeinflussen, zu benötigen, kann das Kernmaterial im Bereich der Krafteinleitungsstelle entfernt bzw. gestaucht, wodurch die Zusammenführung der Deckschichten ermöglicht wird.

Ein weiterer Vorteil kann dadurch realisiert werden, dass das Krafteinleitungselement einen oder mehrere Flansche aufweist, wodurch die Kräfte und Momente über eine größere Fläche in die Kernverbund-Struktur eingeleitet werden können.

Damit das Krafteinleitungselement im Bereich der Krafteinleitungsstelle mit der gesamten Kernverbund-Struktur kraft- und formschlüssig verbunden werden kann, weist das Krafteinleitungselement Löcher zur Aufnahme der Armierungselemente auf. Dadurch kann ein Ablösen des Krafteinleitungselementes verhindert werden und die Schälfestigkeit zwischen dem Krafteinleitungselement und der Kernverbund-Struktur erhöht werden. Muss aufgrund der technischen Anforderungen an das Kernverbund-Bauteil (z.B. Schiffsrumpf im Schiffsbau) die Durchdringung mindestens einer Deckschicht des Kernverbundes vermieden werden, kann das Krafteinleitungselement (sogenanntes Onsert) auf einer der beiden oder auf beiden Deckschichten angeordnet werden.

Um höhere Kräfte und Momente in die Kernverbund-Struktur einleiten zu können, kann das Krafteinleitungselement (sogenanntes Insert) auch innerhalb einer der beiden oder innerhalb beider Deckschichten angeordnet werden. Des Weiteren kann das Krafteinleitungselement zwischen den beiden Deckschichten platziert und gemäß die Definition des Anspruchs 1 vernäht werden, wodurch teilweise oder der gesamte Kernwerkstoff durchsetzt ist.

Ein weiterer Vorteil kann durch die anwendungsbezogene geometrische und konstruktive Gestaltung des Krafteinleitungselementes erreicht werden, indem das Krafteinleitungselement einen oder mehrere an der Deckschicht oder an den Deckschichten anliegende Ansätze aufweist, wodurch die Einleitung der Kräfte und Momente infolge des größeren Hebelarms verbessert werden kann.

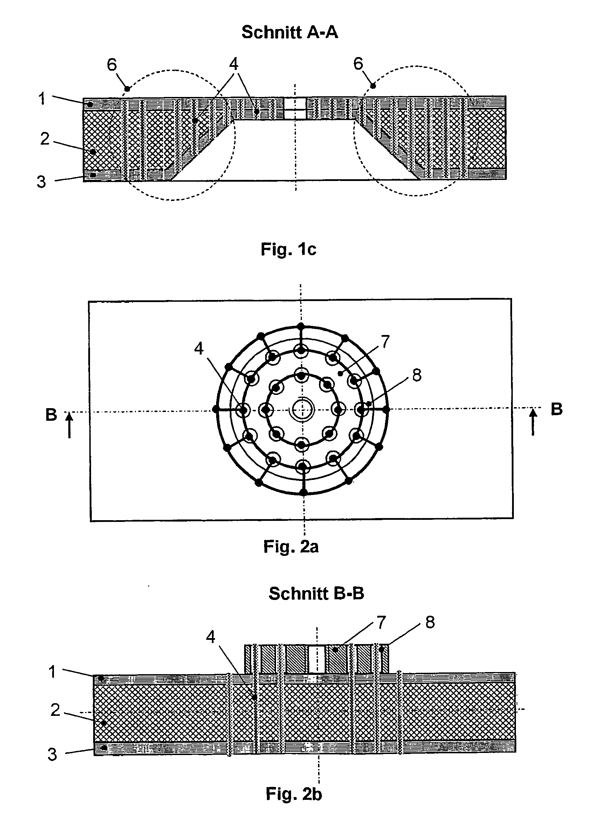

Mit dieser Erfindung besteht für eine Art der Krafteinleitungsstelle in Kernverbunden die Möglichkeit der Armierung darin, dass das Kernmaterial im Bereich der Krafteinleitungsstelle entfernt bzw. gestaucht wird und beide Deckschichten zusammengeführt werden, so dass ein monolithischer Bereich aus Faser-Kunststoff-Verbund vorliegt. Hierbei wird die obere Deckschicht (1) mit der unteren Deckschicht (3) im Bereich der Krafteinleitungsstelle (5) mit Hilfe einer Nähtechnik in Dickenrichtung der Kernverbund-Struktur eingebrachten durchsetzenden Armierungselemente (4) verbunden (Fig. 1a und 1b). Des weiteren können die Armierungselemente (4) über die Krafteinleitungsstelle hinaus (6) in die Krafteinleitungsstelle umgebende Kernverbund-Struktur hineinreichen, um höhere Kräfte und Momente aufzunehmen bzw. die mechanischen Eigenschaften zu verbessern (Fig. 1 c). Die armierte Krafteinleitung ohne Krafteinleitungselement für Kernverbunde mit Deckschichten aus textilen Halbzeugen (1 und 3), einem Kernmaterial (2) und polymerem Matrixwerkstoff kann in einem der zahlreichen LCM-Verfahren hergestellt werden. In einem der Einbringung des polymeren Matrixwerkstoffs vorgeschalteten Arbeitsschritt wird zunächst das Kernmaterial im Bereich der Krafteinleitungsstelle entfernt bzw. gestaucht. Anschließend werden die beiden Deckschichten zusammengeführt und die obere Deckschicht (1), das Kernmaterial (2) und die untere Deckschicht (3) im Bereich der Krafteinleitung (5) und ggf. darüber hinaus (6) mit einer textilen Armierungsstruktur (4) in Dickenrichtung der Kernverbund-Struktur mit Hilfe der Nähtechnik miteinander vernäht. Danach wird die Kernverbund-Struktur einschließlich der textilen Armierungsstruktur in einem LCM-Verfahren (z.B. Harzinjektions- bzw. Harzinfiltrationsverfahren) mit einem polymeren Matrixwerkstoff (Duro- oder Thermoplast) imprägniert und ausgehärtet.

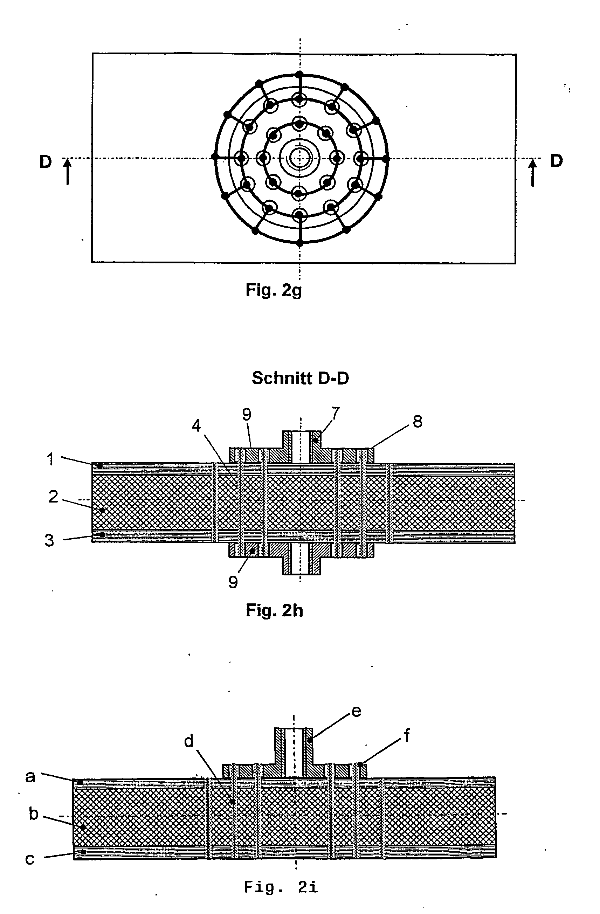

Zur Einleitung von Kräften und Momenten kann auch ein auf die Kernverbund-Struktur aufgebrachtes Krafteinleitungselement (Onsert, 7) verwendet werden (Fig. 2a und 2b). Das Onsert wird auf eine der beiden (Fig. 2a bis 2f) oder auf beide Deckschichten (Fig. 2g) aufgebracht und mit der gesamten Kernverbund-Struktur im Bereich der Krafteinleitungsstelle mit Hilfe von

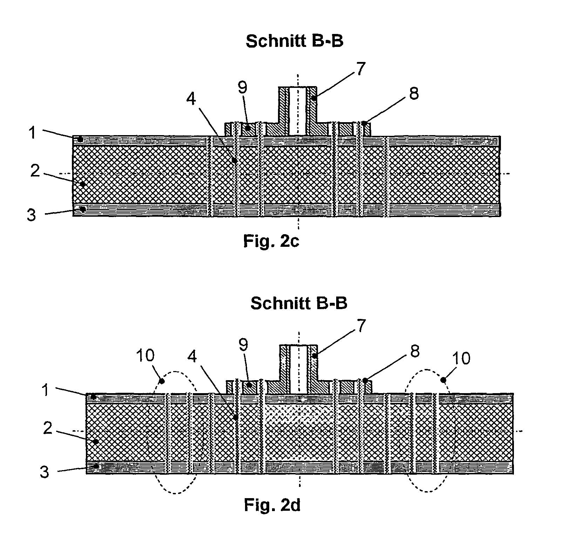

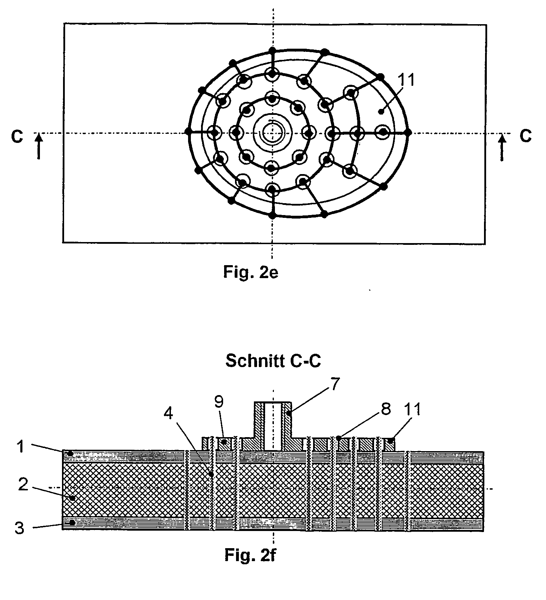

Armierungselementen (4) in Dickenrichtung der Kernverbund-Struktur verbunden. Zur Aufnahme der Armierungselemente weist das Onsert Löcher (8) auf. Das Onsert kann einen seitlich abstehenden Flansch (9) aufweisen (Fig. 2c), der auf der oberen (1) oder der unteren Deckschicht (3) angeordnet ist, und ebenfalls Löcher (8) zur Aufnahme der Armierungselemente aufweist. Zur besseren Einleitung der Kräfte und Momente können die Armierungselemente (4) in Dickenrichtung der Kernverbund-Struktur über das Onserts bzw. den Flansch des Onserts hinaus (10) in die Kernverbund-Struktur eingebracht werden (Fig. 2d). Weiterhin kann der Flansch des Onserts zur besseren Kraft- und Momenteinleitung in die Kernverbund-Struktur einen oder mehrere Ansätze (11) aufweisen (Fig. 2e und 2f). Das Onsert (7) und die Kernverbund-Struktur werden in einem der Einbringung des polymeren Matrixwerkstoffs vorgeschalteten Arbeitsschritt im Bereich der Krafteinleitungsstelle mit einer textilen Armierungsstruktur (4) in Dickenrichtung der Kernverbund-Struktur mit Hilfe einer industriellen Nähtechnik miteinander vernäht. Anschließend erfolgt die Imprägnierung und Aushärtung der Deckschichten, der Kernschicht und der textilen Armierungsstruktur mit einem polymeren Werkstoff in einem LCM-Verfahren.

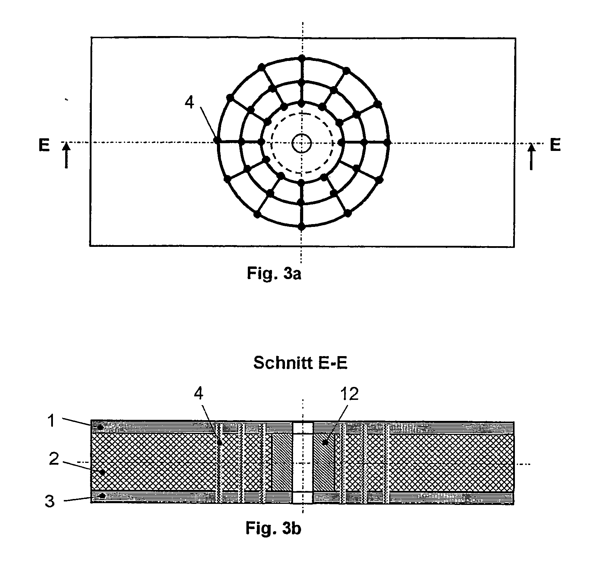

Krafteinleitungsstellen mit in die Kernverbund-Struktur eingebrachtem Krafteinleitungselement (Insert, 12) können dadurch verstärkt werden, dass die obere Deckschicht (1), das Kernmaterial (2) und die untere Deckschicht (3) außerhalb des Bereichs des Inserts mit Armierungselemente (4) in Dickenrichtung der Kernverbund-Struktur miteinander verbunden werden (Fig. 3a und 3b). Das Verfahren zur Herstellung von Krafteinleitungsstellen mit eingebrachtem Krafteinleitungselement (12) für Kernverbunde mit Deckschichten aus textilen Halbzeugen (1 und 3), einem Kernmaterial (2) und polymerem Matrixwerkstoff sieht vor, dass in einem der Einbringung des polymeren Matrixwerkstoffs vorgeschalteten Arbeitsschritt die obere Deckschicht (1), das Kernmaterial (2) und die untere Deckschicht (3) außerhalb der Krafteinleitungsstelle mit Hilfe einer Nähtechnik in Dickenrichtung der Kernverbund-Struktur eingebrachten textilen Armierungsstruktur (4) miteinander vernäht werden. Nach der Einbringung der Armierungsstruktur erfolgt die Imprägnierung und Aushärtung der Kernverbund-Struktur mit einem polymeren Werkstoff in einem der möglichen LCM-Verfahren.

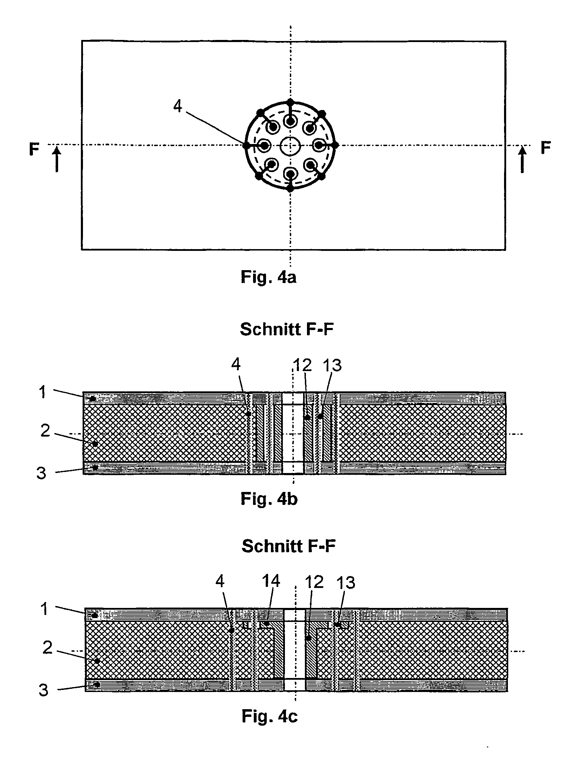

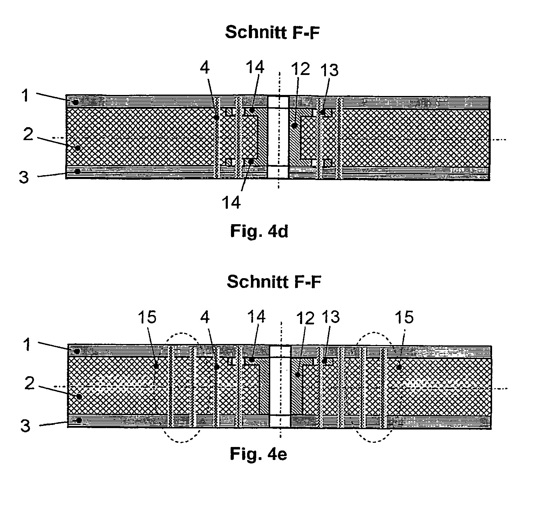

Das Insert (12) kann auch mit der Kernverbund-Struktur mit Hilfe von Armierungselementen (4) in Dickenrichtung der Kernverbund-Struktur verbunden werden (Fig. 4a und 4b). Hierzu weist das Insert Löcher (13) zur Aufnahme der Armierungselemente auf. Weiterhin kann das Insert einen (Fig. 4c) seitlich abstehenden Flansch (14) aufweisen, der sich innerhalb einer Deckschicht (1 oder 3), in der Kernschicht (2, Fig. 4c) oder zwischen der Deck- und Kernschicht befinden kann, und Löcher (13) zur Aufnahme einer textilen Armierungsstruktur aufweist. Das Insert kann auch zwei seitlich abstehende und auf Abstand gehaltene Flansche (14) aufweisen (Fig. 4d), die innerhalb beider Deckschichten (1 und 3), in der Kernschicht (2, Fig. 4d) oder zwischen den Deckschichten (1 und 3) und der Kernschicht (2) angeordnet sein können, und Löcher (13) zur Aufnahme der Armierungselemente aufweisen. Zur besseren Einleitung der Kräfte und Momente können die Armierungselemente (4) in Dickenrichtung der Kernverbund-Struktur über das Insert (12) bzw. den Flansch (14) des Inserts hinaus (15) in die Kernverbund-Struktur eingebracht werden (Fig. 4e). Der Flansch des Inserts kann zur besseren Kraft- und

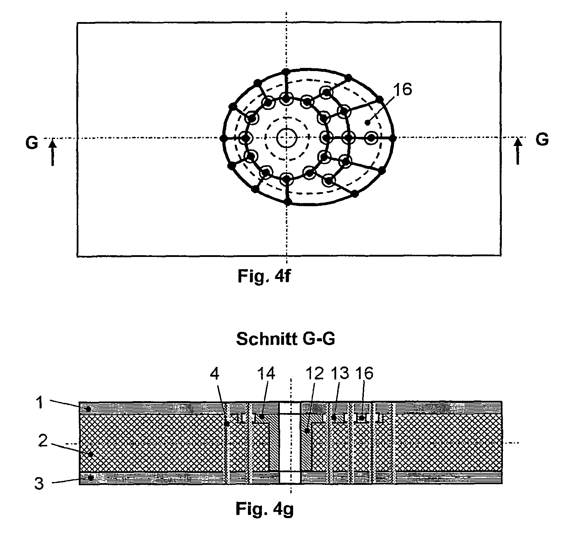

Momenteinleitung in die Kernverbund-Struktur einen oder mehrere Ansätze (16) aufweisen (Fig. 4f und 4g). Das Verfahren zur Herstellung von Krafteinleitungsstellen mit eingebrachten Krafteinleitungselementen (12) für Kernverbunde mit Deckschichten aus textilen Halbzeugen (1 und 3), einem Kernmaterial (2) und polymerem Matrixwerkstoff sieht vor, dass in einem der Einbringung des polymeren Matrixwerkstoffs vorgeschalteten Arbeitsschritt die Inserts mit der Kernverbund-Struktur mit Hilfe der Nähtechnik in Dickenrichtung der Kernverbund-Struktur eingebrachten textilen Armierungsstruktur (4) vernäht werden. Nach dem Einbringen der Armierungsstruktur erfolgt die Imprägnierung und Aushärtung der Kernverbund-Struktur einschließlich der Armierungsstruktur und dem Insert mit einem polymeren Werkstoff in einem LCM-Verfahren.

Die Erfindung ist anhand von 13 Ausführungsbeispielen erläutert. Es zeigen:
Fig. 1 a zeigt die Untersicht eines ersten Ausführungsbeispiels mit einer Krafteinleitungsstelle in Kernverbunden mit zusammengeführten Deckschichten (1 und 3), einem im Krafteinleitungsbereich entferntem Kernmaterial (2) und mit im Bereich der Krafteinleitungsstelle (5) in Dickenrichtung des Kernverbundes durchsetzenden Armierungselementen (4).
Fig. 1b zeigt die Schnittdarstellung nach Linie A-A der Fig. 1a.
Fig. 1c zeigt die Schnittdarstellung nach Linie A-A der Fig. 1 a mit einer zweiten Variante zur Ausführung der Armierungselemente, wobei die Armierungselemente (4) über die Krafteinleitungsstelle hinaus (6) in die Krafteinleitungsstelle umgebende Kernverbund-Struktur hineinreichen.
Fig.2a zeigt die Draufsicht eines dritten Ausführungsbeispiels mit einem auf die obere (1) Deckschicht der Kernverbund-Struktur aufgesetzten Krafteinleitungselement (7, Onsert), wobei das Onsert mit der gesamten Kernverbund-Struktur im Bereich der Krafteinleitungsstelle mit Armierungselementen (4) in Dickenrichtung der Kernverbund-Struktur verbunden ist und Löcher (8) zur Aufnahme der Armierungselemente (4) aufweist.
Fig. 2b zeigt die Schnittdarstellung nach Linie B-B der Fig. 2a.
Fig. 2c zeigt die Schnittdarstellung nach Linie B-B der Fig. 2a mit einer weiteren Variante zur Gestaltung des Onserts, wobei das Onsert einen seitlich abstehenden Flansch (9) aufweist (Fig. 2b), der auf der oberen Deckschicht (1) angeordnet ist, und ebenfalls Löcher (8) zur Aufnahme der Armierungselemente aufweist.
Fig. 2d zeigt die Schnittdarstellung nach Linie B-B der Fig. 2a mit einer weiteren Variante zur Ausführung der Armierungselemente, wobei die Armierungselemente (4) über die Krafteinleitungsstelle hinaus (10) in die Krafteinleitungsstelle umgebende Kernverbund-Struktur hineinreichen.
Fig. 2e zeigt die Draufsicht eines sechsten Ausführungsbeispiels mit einem auf die obere Deckschicht der Kernverbund-Struktur aufgesetzten Krafteinleitungselement (7, Onsert), das zur besseren Kraft- und
Momenteinleitung in die Kernverbund-Struktur einen Ansatz (11) aufweist.
Fig. 2f zeigt die Schnittdarstellung nach Linie C-C der Fig. 2e.
Fig. 2g zeigt die Draufsicht eines siebten Ausführungsbeispiels mit zwei auf die obere (1) und untere Deckschicht (3) der Kernverbund-Struktur aufgesetzten Krafteinleitungselementen (7, Onsert), wobei die beiden Onserts mit der gesamten Kernverbund-Struktur im Bereich der Krafteinleitungsstelle mit Armierungselementen (4) in Dickenrichtung der Kernverbund-Struktur verbunden sind und Löcher (8) zur Aufnahme der Armierungselemente (4) aufweisen.
Fig. 2h zeigt die Schnittdarstellung nach Linie D-D der Fig. 2g.
Fig. 3a zeigt die Draufsicht eines achten Ausführungsbeispiels mit einem in die Kernverbund-Struktur eingesetzten Krafteinleitungselement (12, Insert), wobei das Insert zwischen den beiden Deckschichten (1 und 3) innerhalb des Kernmaterials (2) der Kernverbund-Struktur angeordnet ist und die obere Deckschicht (1), das Kernmaterial (2) und die untere Deckschicht (3) außerhalb des Bereichs des Inserts mit Armierungselementen (4) in Dickenrichtung der Kernverbund-Struktur miteinander verbunden sind.
Fig. 3b zeigt die Schnittdarstellung nach Linie E-E der Fig. 3a.
Fig. 4.a zeigt die Draufsicht eines neunten Ausführungsbeispiels mit einem in die Kernverbund-Struktur eingesetzten Krafteinleitungselement (12, Insert), wobei das Insert zwischen den beiden Deckschichten (1 und 3) innerhalb des Kernmaterials (2) der Kernverbund-Struktur angeordnet ist, Löcher (13) zur Aufnahme der Armierungselemente (4) aufweist und mit der Kernverbund-Struktur mit Hilfe der Armierungselemente in Dickenrichtung der Kernverbund-Struktur verbunden ist.
Fig. 4b zeigt die Schnittdarstellung nach Linie F-F der Fig. 4a.
Fig. 4c zeigt die Schnittdarstellung nach Linie F-F der Fig. 4a mit einer weiteren Variante zur Gestaltung des Inserts, wobei das Insert einen seitlich abstehenden Flansch (14) aufweist, der an der oberen Deckschicht (1) anliegt, Löcher (13) zur Aufnahme der Armierungselemente (4) aufweist und mit der Kernverbund-Struktur mit Hilfe der Armierungselemente in Dickenrichtung der Kernverbund-Struktur verbunden ist.
Fig. 4d zeigt die Schnittdarstellung nach Linie F-F der Fig. 4a mit einer weiteren Variante zur Gestaltung des Inserts, wobei das Insert zwei seitlich abstehende Flansche (14) aufweist, die an der oberen (1) und unteren Deckschicht (3) anliegen, Löcher (13) zur Aufnahme der Armierungselemente (4) aufweisen und mit der Kernverbund-Struktur mit Hilfe der Armierungselemente in Dickenrichtung der Kernverbund-Struktur verbunden sind.
Fig. 4e zeigt die Schnittdarstellung nach Linie F-F der Fig. 4a mit einer weiteren Variante zur Ausführung der Armierungselemente, wobei die Armierungselemente (4) über die Krafteinleitungsstelle hinaus (15) in die Krafteinleitungsstelle umgebende Kernverbund-Struktur hineinreichen.
Fig. 4f zeigt die Draufsicht eines dreizehnten Ausführungsbeispiels mit einem in die Kernverbund-Struktur eingesetzten Krafteinleitungselement (12, Insert), wobei das Insert einen seitlich abstehenden Flansch (14) aufweist, der zur besseren Kraft- und Momenteinleitung in die Kernverbund-Struktur einen Ansatz (16) hat, an der oberen Deckschicht (1) anliegt, Löcher (13) zur Aufnahme der Armierungselemente (4) aufweist und der mit der Kernverbund-Struktur mit Hilfe der Armierungselemente in Dickenrichtung der Kernverbund-Struktur verbunden ist.
Fig. 4g zeigt die Schnittdarstellung nach Linie G-G der Fig. 4f.

## Patentansprüche

1. Krafteinleitungsstelle in Kernverbunden mit einer Armierung der Kernverbund- Struktur mit in Dickenrichtung des Kernverbundes durchsetzenden Armierungselementen und die Deckschichten (1 und 3) aus textilen Halbzeugen, die Kernschicht (2) aus polymerem, natürlichem oder strukturiertem Kernwerkstoff und die Armierungselemente (4) aus einer textilen Armierungsstruktur bestehen, und daß die Deckschichten, die Kernschicht und die Armierungselemente in einem polymeren Matrixwerkstoff eingebettet sind, **dadurch gekennzeichnet daß**,
an der Einleitungsstelle die Deckschichten (1 und 3) des Kernverbundes zusammengeführt sind und/ oder
das Krafteinleitungselement (7) auf einer der beiden (1 oder 3) oder auf beiden Deckschichten (1 und 3) angeordnet ist und/ oder
das Krafteinleitungselement (12) innerhalb einer der beiden (1 oder 3) oder innerhalb beider Deckschichten (1 und 3) angeordnet ist und/ oder
das Krafteinleitungselement (12) zwischen den beiden Deckschichten (1 und 3) angeordnet ist und/ oder das Kernmaterial (2) durchsetzt wobei die Armierungselementen so angeordnet sind, daß das Krafteinleitungselement mit der Kernverbund-Struktur mit Hilfe der Nähtechnik in Dickenrichtung der Kernverbundstruktur eingebrachten textilen Armierungsstruktur (4) vernäht werden.

2. Krafteinleitungsstelle in Kernverbunden nach Anspruch 1, wobei die Armierungselemente (4) über die Krafteinleitungsstelle hinaus (6, 10 und 15) in die Krafteinleitungsstelle umgebende Kernverbund-Struktur hineinreicht.

3. Krafteinleitungsstelle in Kernverbunden nach einem der Ansprüche 1 und 2, wobei das Kernmaterial (2) im Bereich der Krafteinleitungsstelle entfernt bzw. gestaucht ist.

4. Krafteinleitungsstelle in Kernverbunden nach einem der Ansprüche 1 bis 3, wobei das Krafteinleitungselement (7 und 12) einen oder mehrere Flansche (9 und 14) aufweist.

5. Krafteinleitungsstelle in Kernverbunden nach einem der Ansprüche 1 bis 4, wobei das Krafteinleitungselement Löcher (8 und 13) zur Aufnahme der Armierungselemente (4) aufweist und mit der Kernverbund-Struktur im Bereich der Krafteinleitungsstelle mittels der Armierungselemente in Dickenrichtung der Kernverbund-Struktur verbunden ist.

6. Krafteinleitungsstelle in Kernverbunden nach einem der Ansprüche 1 bis 5, wobei das Krafteinleitungselement (12) das Kernmaterial (2) durchsetzt.

7. Krafteinleitungsstelle in Kernverbunden nach einem der Ansprüche 1 bis 6, wobei das Krafteinleitungselement einen oder mehrere an der Deckschicht (1 oder 3) oder an den Deckschichten (1 und 3) anliegende Ansätze (11 und 16) aufweist.

8. Verfahren zur Herstellung einer Krafteinleitungsstelle in Kernverbunden nach einem der Ansprüche 1 bis 7, wobei im Bereich der Krafteinleitungsstelle in einem der Einbringung des polymeren Matrixwerkstoffs vorgeschalteten Arbeitsschritt das Kernmaterial (2) entfernt bzw. gestaucht wird, die beiden Deckschichten (1 und 3) zusammengeführt werden und die obere Deckschicht (1), das Kernmaterial (2) und die untere Deckschicht (3) im Bereich der Krafteinleitungsstelle und/ oder darüber hinaus (6) mit Hilfe einer Nähtechnik eingebrachten textilen Armierungselemente (4) in Dickenrichtung der Kernverbundstruktur miteinander vernäht werden.

9. Verfahren zur Herstellung einer Krafteinleitungsstelle in Kernverbunden nach einem der Ansprüche 1 bis 7, wobei im Krafteinleitungsstelle in einem der Einbringung des polymeren Matrixwerkstoffs vorgeschalteten Arbeitsschritt die Krafteinleitungselemente (7 und 12) und die Kernverbund-Struktur im Bereich der Krafteinleitung mit Hilfe einer Nähtechnik eingebrachten textilen Armierungselemente (4) in Dickenrichtung der KernverbundStruktur miteinander vernäht werden.

10. Verfahren zur Herstellung einer Krafteinleitungsstelle in Kernverbunden nach einem der Ansprüche 1 bis 7, wobei im Bereich der Krafteinleitungsstelle in einem der Einbringung des polymeren Matrixwerkstoffs vorgeschalteten Arbeitsschritt die obere Deckschicht (1), die Kernschicht (2) und die untere Deckschicht (3) außerhalb des Bereichs des Krafteinleitungselementes mit Hilfe einer Nähtechnik eingebrachten textilen Armierungselemente (4) in Dickenrichtung der KernverbundStruktur miteinander vernäht werden.

11. Verwendung der Krafteinleitungsstelle nach einem der Ansprüche 1 bis 7 zum Bau von Raum-, Luft-, Wasser oder Landfahrzeugen..

## Claims

1. Force introduction point in core composites having a reinforcement of the core composite structure with reinforcing elements that traverse the thickness of the core composite, wherein the cover layers (1 and 3) consist of textile semifinished products, the core layer (2) consists of polymeric, natural or structured core material and the reinforcing elements (4) consist of a textile reinforcing structure, and wherein the cover layers, the core layer and the reinforcing elements are embedded in a polymeric matrix material,
**characterized in that**
the cover layers (1 and 3) of the core composite are brought together at the force introduction point and/or
the force introduction element (7) is arranged on one of the two cover layers (1 or 3) or on both cover layers (1 and 3) and/or
the force introduction element (12) is arranged within one of the two cover layers (1 or 3) or within both cover layers (1 and 3) and/or
the force introduction element (12) is arranged between the two cover layers (1 and 3) and/or traverses the core material (2), the reinforcing elements being arranged such that the force introduction element is stitched to the core composite structure by textile reinforcing elements (4) incorporated with the aid of a stitching technique in the direction of the thickness of the core composite structure.

2. Force introduction point in core composites according to Claim 1, wherein the reinforcing elements (4) reach beyond the force introduction point (6, 10 and 15) into the core composite structure surrounding the force introduction point.

3. Force introduction point in core composites according to either of Claims 1 and 2, wherein the core material (2) is removed or compressed in the region of the force introduction point.

4. Force introduction point in core composites according to one of Claims 1 to 3, wherein the force introduction element (7 and 12) has one or more flanges (9 and 14).

5. Force introduction point in core composites according to one of Claims 1 to 4, wherein the force introduction element has holes (8 and 13) for receiving the reinforcing elements (4) and is connected to the core composite structure in the region of the force introduction point by means of the reinforcing elements in the direction of the thickness of the core composite structure.

6. Force introduction point in core composites according to one of Claims 1 to 5, wherein the force introduction element (12) traverses the core material (2).

7. Force introduction point in core composites according to one of Claims 1 to 6, wherein the force introduction element has one or more attachments (11 and 16) lying against the cover layer (1 or 3) or against the cover layers (1 and 3).

8. Method for producing a force introduction point in core composites according to one of Claims 1 to 7, wherein, in a working step preceding the incorporation of the polymeric matrix material, the core material (2) is removed or compressed in the region of the force introduction point, the two cover layers (1 and 3) are brought together and the upper cover layer (1), the core material (2) and the lower cover layer (3) in the region of the force introduction point and/or beyond (6) are stitched to one another by textile reinforcing elements (4) incorporated with the aid of a stitching technique in the direction of the thickness of the core composite structure.

9. Method for producing a force introduction point in core composites according to one of Claims 1 to 7, wherein, in a working step preceding the incorporation of the polymeric matrix material, in the force introduction point the force introduction elements (7 and 12) and the core composite structure in the region of the force introduction are stitched to one another by textile reinforcing elements (4) incorporated with the aid of a stitching technique in the direction of the thickness of the core composite structure.

10. Method for producing a force introduction point in core composites according to one of Claims 1 to 7, wherein, in a working step preceding the incorporation of the polymeric matrix material, in the region of the force introduction point the upper cover layer (1), the core layer (2) and the lower cover layer (3) outside the region of the force introduction element are stitched to one another by textile reinforcing elements (4) incorporated with the aid of a stitching technique in the direction of the thickness of the core composite structure.

11. Use of the force introduction point according to one of Claims 1 to 7 for the construction of spacecraft, aircraft, watercraft or land vehicles.

## Revendications

1. Zone d'induction de forces dans des panneaux sandwich avec une armature de la structure à panneaux sandwich avec des éléments d'armature traversant un tel panneau sandwich dans le sens de l'épaisseur, les couches de couverture (1 et 3) étant en semi-produits textiles, la couche centrale (2) en matériau central polymère naturel ou structuré et les éléments d'armature (4) en structure d'armature textile et les couches de couverture, la couche centrale et les éléments d'armature étant encastrés dans un matériau matriciel polymère, **caractérisée en ce que**,
au niveau de la zone d'induction, les couches de couverture (1 et 3) du panneau sandwich sont réunies et/ou
l'élément d'induction de forces .(7) est disposé sur une des deux (1 ou 3) ou sur les deux couches de couverture (1 et 3) et/ou
l'élément d'induction de forces (12) est disposé dans une des deux (1 ou 3) ou dans les deux couches de couverture (1 et 3) et/ou
l'élément d'induction de forces (12) est disposé entre les deux couches de couverture (1 et 3) et/ou traverse le matériau central (2), les éléments d'armature étant disposés de manière à ce que l'élément d'induction de forces soit cousu à la structure à panneaux sandwich à l'aide d'éléments d'armature textiles (4) introduits par technique de couture dans le sens de l'épaisseur de la structure à panneaux sandwich.

2. Zone d'induction de forces dans des panneaux sandwich selon la revendication 1, les éléments d'armature (4) rentrant au-delà de la zone d'induction de forces (6, 10 et 15) dans la structure à panneaux sandwich entourant la zone d'induction de forces.

3. Zone d'induction de forces dans des panneaux sandwich selon l'une quelconque des revendications 1 et 2, le matériau central (2) étant enlevé ou échangé au niveau de la zone d'induction de forces.

4. Zone d'induction de forces dans des panneaux sandwich selon l'une quelconque des revendications 1 à 3, l'élément d'induction de forces (7 et 12) présentant une ou plusieurs brides (9 et 14).

5. Zone d'induction de forces dans des panneaux sandwich selon l'une quelconque des revendications 1 à 4, l'élément d'induction de forces présentant des trous (8 et 13) pour recevoir les éléments d'armature (4) et étant relié à la structure à panneaux sandwich au niveau de la zone d'induction de forces par les éléments d'armature dans le sens de l'épaisseur de la structure à panneaux sandwich.

6. Zone d'induction de forces dans des panneaux sandwich selon l'une quelconque des revendications 1 à 5, l'élément d'induction de forces (12) traversant le matériau central (2).

7. Zone d'induction de forces dans des panneaux sandwich selon l'une quelconque des revendications 1 à 6, l'élément d'induction de forces présentant une ou plusieurs embases (11 et 16) reposant sur la couche de couverture (1 ou 3) ou sur les couches de couverture (1 et 3).

8. Procédé de fabrication d'une zone d'induction de forces dans des panneaux sandwich selon l'une quelconque des revendications 1 à 7, dans lequel, au niveau de la zone d'induction de forces, dans une étape opérationnelle précédant l'introduction du matériau matriciel polymère, on enlève ou on échange le matériau central (2), les deux couches de couverture (1 et 3) sont réunies et la couche de couverture supérieure (1), le matériau central (2) et la couche de couverture inférieure (3) sont cousus ensemble au niveau de la zone d'induction de forces et/ou au-delà (6) à l'aide d'éléments d'armature textiles (4) introduits par technique de couture dans le sens de l'épaisseur de la structure à panneaux sandwich.

9. Procédé de fabrication d'une zone d'induction de forces dans des panneaux sandwich selon l'une quelconque des revendications 1 à 7, dans lequel, au niveau de la zone d'induction de forces, dans une étape opérationnelle précédant l'introduction du matériau matriciel polymère, les éléments d'induction de forces (7 et 12) et la structure à panneaux sandwich sont cousus ensemble au niveau de la zone d'induction de forces à l'aide d'éléments d'armature textiles (4) introduits par technique de couture dans le sens de l'épaisseur de la structure à panneaux sandwich.

10. Procédé de fabrication d'une zone d'induction de forces dans des panneaux sandwich selon l'une quelconque des revendications 1 à 7, dans lequel, au niveau de la zone d'induction de forces, dans une étape opérationnelle précédant l'introduction du matériau matriciel polymère, la couche de couverture supérieure (1), la couche centrale (2) et la couche de couverture inférieure (3) sont cousues ensemble en dehors de l'élément d'induction de forces à l'aide d'éléments d'armature textiles (4) introduits par technique de couture dans le sens de l'épaisseur de la structure à panneaux sandwich.

11. Utilisation de la zone d'induction de forces selon l'une quelconque des revendications 1 à 7 pour la construction de véhicules spatiaux, aéronautiques, aquatiques ou terrestres.
